**Europäisches Patentamt**

**European Patent Office**

**Office européen des brevets**

(19)

(11) Veröffentlichungsnummer : **0 383 191 B1**

(12)

# EUROPÄISCHE PATENTSCHRIFT

(45) Veröffentlichungstag der Patentschrift :
**16.09.92 Patentblatt 92/38**

(51) Int. Cl.⁵ : **A01M 29/02**

(21) Anmeldenummer : **90102459.6**

(22) Anmeldetag : **08.02.90**

(54) **Gerät zur Vertreibung von Maulwürfen, Wühlmäusen o. dgl.**

(30) Priorität : **14.02.89 DE 8901633 U**

(43) Veröffentlichungstag der Anmeldung :
**22.08.90 Patentblatt 90/34**

(45) Bekanntmachung des Hinweises auf die
Patenterteilung :
**16.09.92 Patentblatt 92/38**

(84) Benannte Vertragsstaaten :
**AT BE CH DE FR GB IT LI NL**

(56) Entgegenhaltungen :
**AT-B- 375 811**
**DE-A- 2 352 987**
**DE-A- 3 403 146**

(56) Entgegenhaltungen :
**DE-C- 3 624 489**
**US-A- 4 366 562**
**ELEKTRONIK, Heft 1, Jänner 1980, München,**
**H. RECHBERGER "Solarzellen in der Praxis"**
**Seiten 72-78**

(73) Patentinhaber : **DEKUR Elektronic Geräte**
**Vertriebs-GmbH**
**Backesgasse 12**
**W-5400 Koblenz (DE)**

(72) Erfinder : **De Kunder, Adriaan**
**Backesgasse 12**
**W-5400 Koblenz (DE)**

(74) Vertreter : **Hentschel, Peter, Dipl.-Ing.**
**Hohenzollernstrasse 21**
**W-5400 Koblenz (DE)**

EP 0 383 191 B1

Jouve, 18, rue Saint-Denis, 75001 PARIS

## Beschreibung

Die Erfindung betrifft ein Gerät zur Vertreibung von Maulwürfen, Wühlmäusen o.dgl., bestehend aus einem in das Erdreich einsteckbaren, rohrförmigen, mit einer Spitze versehenen Pfahl und aus einem am oberen Ende des Pfahles gehaltenen, gehäuseförmigen Kopf, wobei am unteren Ende des Pfahles, innen, ein elektrisch betriebener, das Rohr zur Schallabgabe an das Erdreich erregender Schallgeber vorgesehen ist, zwischen Schallgeber und Kopf im Inneren des Rohres eine in Rohr-Längsrichtung verlaufende Platine mit Energie-Spar-Intervall-Elektronik untergebracht und der Kopf als Energieversorgungseinheit ausgebildet ist.

Ein Gerät der eingangs genannten Art ist in der DE-PS 34 03 146 beschrieben. Es hat bei geringem Energieverbrauch eine große Reichweite. Im Kopf sind Batterien untergebracht, und der Pfahl besteht aus einem Aluminiumrohr, das als Ultraschall-Resonanz-Schwinger ausgebildet ist.

Die Energie-Spar-Intervall-Elektronik erregt mittels Rückkopplungs-Schwingkreises einen Elektromagneten, in dessen Feld eine Blattfeder als Schallgeber schwingt. Die Blattfeder schwingt mit 400 bis 500 Hz, wodurch das Aluminiumrohr, in Resonanz schwingend, Oberwellen bis in den Ultraschallbereich hinein erreicht, die auf das Erdreich übertragen werden.

Auch wenn die Batterien dieses bekannten Gerätes wochenlang halten, stellen sie, wenn sie leer sind, als besonders zu entsorgender Abfall eine Umweltbelastung dar. Darüber hinaus hat sich die Blattfeder als Schwachstelle erwiesen. Trotz schärfster Gütekontrollen ist es nicht möglich, das Metall der Blattfedern einheitlich hochwertig zu halten. Es kommt vor, daß gewisse Qualitäts-Toleranzen Grenzen erreichen, durch welche sich im Betrieb Materialermüdungen einstellen. Dadurch kann sich die Federkraft und die Eigenfrequenz der Blattfeder verändern, so daß keine Resonanz mehr erreicht wird, es kann auch zu Materialbruch kommen. Da solche Grenzwerte der Qualitäts-Toleranzen des Blattfedermateriales auf wirtschaftlich vertretbare Weise nicht erfaßbar sind, muß ständig ein mehr oder weniger großer Anteil von Geräten, die mit Blattfeder-Schäden ausfallen, in Kauf genommen werden.

Der Erfindung liegt die Aufgabe zugrunde, das Gerät der eingangs genannten Art umweltfreundlich und von hohen Materialqualitäten des Schallgebers unabhängig auszubilden.

Diese Aufgabe wird bei dem Gerät der eingangs genannten Art erfindungsgemäß dadurch gelöst, daß der Schallgeber ein Elektromotor ist, der mit parallel zur Rohrachse verlaufender Drehachse mittels zweier Phosphorbronze-Federzungen im Abstand unter dem unteren Ende der Platine gehalten und zugleich mit Energie-Abgabe-Lötstellen der Platine verbunden und an den nach unten weisenden Abtriebswellenende mit einem Unwucht-Gewicht versehen ist, daß der Kopf ein Kunststoff-Rohrkreuz mit oben angesetzter Pultfläche ist, das mit einem nach unten offenen, lotrecht verlaufenden Rohrstück kappenartig dicht und fest auf dem oberen Ende des schallabgebenden Rohres aufsitzt, in einem darüberliegenden, waagerecht verlaufenden Rohrstück, welches einendig eine dichtschließende Schalt- und Verschlußkappe aufweist, aufladbare Akkus enthält und mit einem oberen, lotrecht verlaufenden Rohrstück die mit ihrer Unterkante in Höhe des waagerecht verlaufenden Rohrstückes verlaufende und an dieses angeformte Pultfläche trägt, daß die Pultfläche außerdem einstückig an das obere Rohrstück angeformt ist, auf der Oberseite einen Satz die Akkus aufladender Solarzellen trägt, die nach oben hin von einer die gesamte Pultfläche übergreifender Acrylglasplatte abgedeckt sind, wobei die Acrylglasplatte von einem äußeren, dunklen Kunststoff-Rahmen eingefaßt ist.

Erfindungsgemäß ist der Schallgeber ein Elektromotor mit Unwucht, der in Intervallen arbeitet. Durch die Unwucht "rüttelt" er, und diese Rüttelschwingungen, die etwa im Bereich um 10 Hz liegen, werden auf das Aluminiumrohr übertragen. Diese Infraschallschwingungen, die der Elektromotor mit etwa 0,7 Watt und einem Unwuchtgewicht von ca. 0,8 gr. erzeugt, haben im Vergleich zum Ultraschallschwinger eine sehr große Schwingungsampitude, so daß eine große Reichweite auch bei Infraschall gewährleistet ist.

An sich hat sich die Verwendung eines Elektromotors mit Unwucht, die z.B. durch das Gerät gemäß AT-PS 375 811 bekannt ist, in der Praxis als zu energieaufwendig erwiesen.

Bei dem aus der AT-PS bekannten Gerät hat der Pfahl außen vorspringende Erdgewindegänge, die seine Schallübertragungseigenschaften verschlechtern, weil sie die unmittelbare Umgebung des Erdreiches auflockern. Dadurch wird Schall eher gedämpft als optimal fortgeleitet.

Außerdem sitzt der Motor im Kopf, wodurch wenig Platz für Batterien oder gar für eine nur andeutungsweise genannte Intervallsteuerung verbleibt. Der Motor hat eine durch das gesamte Rohr nach unten, in die Pfahlspitze reichende Welle und die Unwucht im Bereich der Pfahlspitze. Das belastet Motor und Welle erheblich, bzw. ruft starken Lagerverschleiß hervor. Deshalb muß der Elektromotor kräftig und stabil sein. Das schließt aber den alternativ offenbarten Batterie-Betrieb aus. Zur gesteuerten Energieversorgung sind daher Elektrokabel erforderlich. Die Nachteile, insbesondere Gefahren und die Störanfälligkeit, solchen Vorgehens sind offensichtlich.

Daher ist ein wesentlicher Lösungsbestandteil des erfindungsgemäß ausgebildeten Gerätes die Verwendung von Akkus, die von Solarzellen aufgeladen werden.

Die Raumform des Kopfes dient einerseits der Unterbringung der Akkus und andererseits der Schaffung einer wetterfesten, dichten Pultfläche zur Unterbringung der Solarzellen. Im Vergleich zum Gerät der eingangs genannten Art ist der Pfahl, bzw. das Aluminiumrohr länger, damit die Pultfläche ungehindert von Halmen und Blattwerk ihre Solarzellen dem Sonnenlicht darbieten kann.

Die Weiterbildung gemäß Anspruch 2 gewährleistet insbesondere hohe Stabilität und Dichtheit des Kopfes bei günstiger Raumaufteilung.

Gemäß Anspruch 3 nimmt die Pultfläche acht, in Serie geschaltete, multikristalline Solarzellen mit einer Gesamtgröße von 121,4 X 49,2 mm Größe auf. Bei einer typischen Durchschnittsleistung von AM = 1,5 - 100 m W/cm² ergibt sich trotz vergleichsweise kleiner Solarzellenfläche eine hinreichend große und zuverlässige Energieversorgung, vorausgesetzt, die Energie-Spar-Intervall-Elektronik geht sparsam mit Energie um.

Diese Forderung wird mit der Weiterbildung gemäß Anspruch 4 optimal erfüllt. Eine Betriebszeit von einer Sekunde reicht bei dem erzeugten kräftigen Infraschall aus, um eine nachhaltige Störung und damit Vertreibung von Wühlmäusen, Maulwürfen usw. zu erzielen. Diese kurze Betriebszeit erfordert aber entsprechend geringen Energie-Verbrauch, so daß die von den Solarzellen geladenen Akkus z.B. für mindestens 6 Stunden totaler Dunkelheit Energie haben, vorausgesetzt, die Pausen sind nicht zu kurz.

Dies zu gewährleisten ist die Funktion der Regeleinheit. Wie die Weiterbildung gemäß Anspruch 3 bereits offenbart, ist zwischen den Solarzellen und den Akkus auf der Plus-Seite eine Sperrdiode vorgesehen, die zunächst als Entladeschutz für die Akkus dient. Die Intervallschalter, die Treiberstufe und der Leistungsschalter liegen unmittelbar am Plus-Pol der Akkus. Die Regeleinheit liegt aber plusseitig vor der Sperrdiode am Plus-Pol der Solarzellen. Je mehr die Solarzellenspannung gegenüber der Akkuspannung abnimmt, diese bei Dunkelheit gar unterschreitet, um so mehr wird das Basispotential des Transistors des für die Pausenlänge zuständigen R-C-Gliedes verändert, und um so länger dauert dann auch die Aufladung des zugehörigen Kondensators bis zum Schaltpunkt. So wird trotz eines Kondensators fester Größe eine variable Schaltzeit des R-C-Gliedes erreicht. Bei Dunkelheit dauern die Pausen z.B. hundertachtzig Sekunden und bei vollem Sonnenlicht nur fünfzig Sekunden.

Auf diese Weise wird die Pause jeweils an die vorhandene Sonnenenergie angepaßt. Auch bei wochenlangen Schlechtwetterperioden gibt es keinen Betriebsausfall, sondern nur längere Pausen.

Die Veränderung der Pause, abhängig vom Sonnenlicht, hat den Vorteil, daß Gewöhnungseffekte der Schädlinge verhindert werden. Bei Pausen von nur fünfzig Sekunden Dauer, bei voller Sonneneinstrahlung, verhindert diese Pausenlänge eine Überladung der Akkus, wodurch wiederum deren Lebensdauer verlängert wird.

Der Kopf mit Rohrkreuz, Pultfläche mit Solarzellen ist innen weitgehend schwitzwassergeschützt und nach außen vollkommen nässedicht. Seine dichte Verbindung mit dem Aluminiumrohr gewährleistet witterungsunabhängige Zuverlässigkeit des Gerätes.

Batterien, die als Abfall umweltbelastend wären, werden nicht gebraucht. Die Solarzellen garantieren auch bei dem vergleichsweise energieverzehrenden Elektromotor zuverlässige Energieversorgung. Eine extrem hoch belastete Blattfeder, wie beim Gerät der eingangs genannten Art, gibt es nicht, so daß Störfälle durch versagende Blattfedern nicht vorkommen können. Der mittels Phosphorbronze-Federzungen an der Platine hängende Elektromotor beansprucht die Phosphorbronze-Federzungen nur begrenzt, gewisse Abweichungen der Materialqualität spielen keine Rolle, weil diese Federzungen nicht mit 400 bis 500 Hz synchron in Resonanz mit einem Rückkopplungsschwingkreis arbeiten müssen wie die Blattfeder. Die Platine hängt frei im Aluminiumrohr und ist derart sicher geschützt.

Ein Ausführungsbeispiel des erfindungsgemäß ausgebildeten Gerätes ist in den Zeichnungen dargestellt. Es zeigen:

Fig.1+2 - Front- und Rückansicht des Gerätes gemäß der Erfindung,

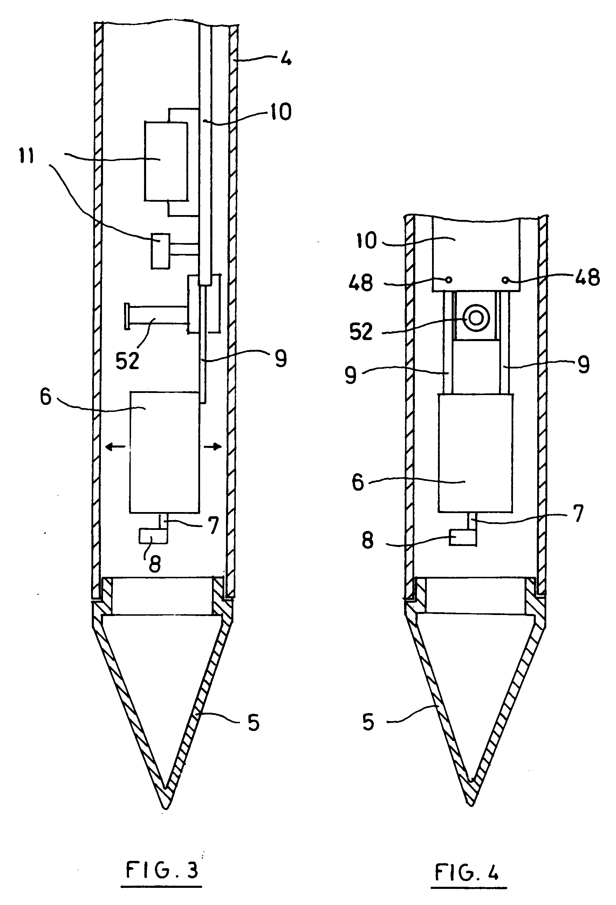

Fig. 3 - eine Schemaschnittansicht des Pfahles mit Schallgeber und Elektronik,

Fig. 4 - eine weitere Schnittansicht gemäß Fig. 3 bei rechtwinklig zu Fig. 3 verlaufender Schnittebene,

Fig. 5 - den Kopf im Querschnitt -rechtwinklig zur Pultfläche geschnitten-,

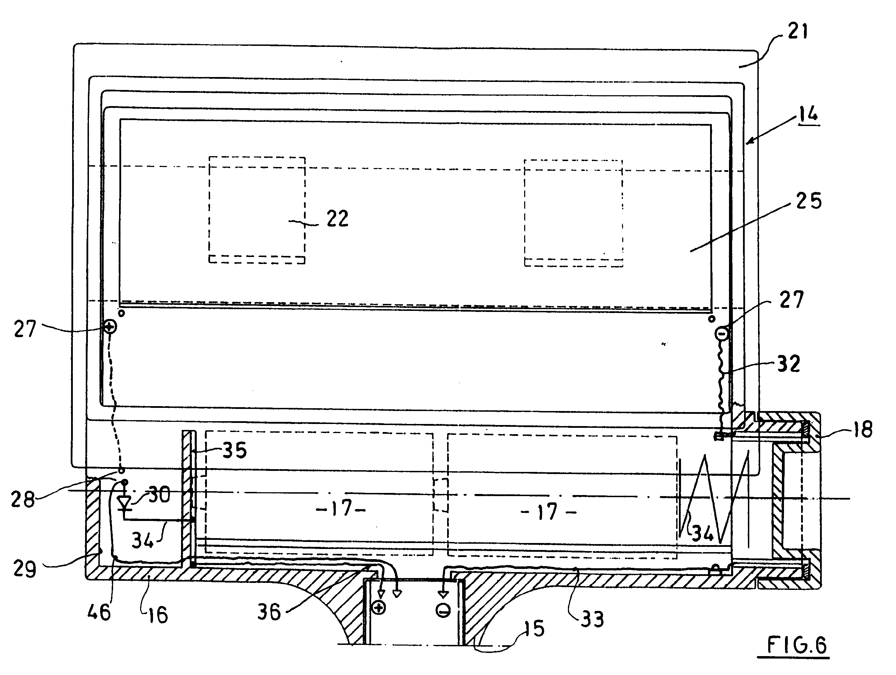

Fig. 6 - einen durch das waagerechte Rohrstück des Kopfes lotrecht verlaufenden Schema-Schnitt des Kopfes und

Fig. 7 - die Schaltung der Energiespar-Intervall-Elektronik.

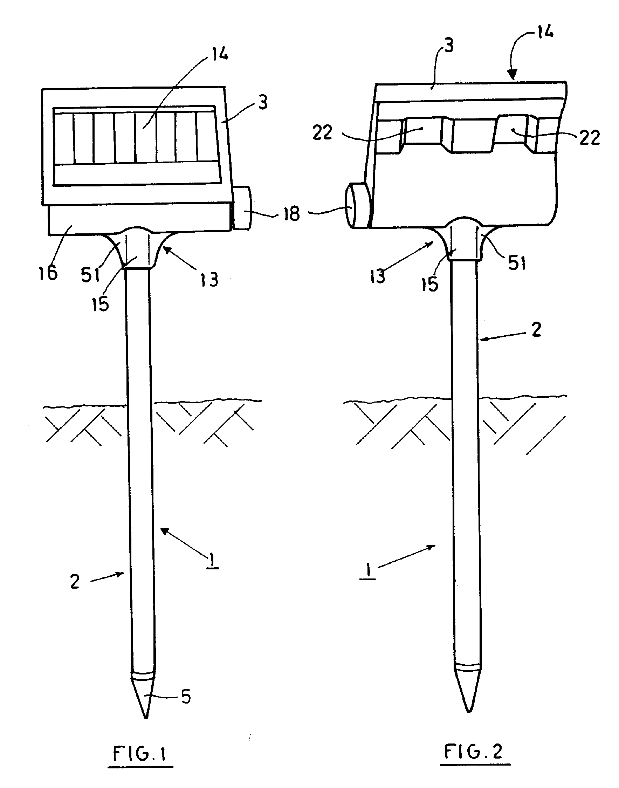

Die Figuren 1 und 2 zeigen ein Gerät 1 zur Vertreibung von Maulwürfen, Wühlmäusen o.dgl. Das Gerät 1 besteht aus einem Pfahl 2 und einem Kopf 3.

Der Pfahl 2 ist als Aluminiumrohr 4 ausgebildet und hat eine dicht und fest eingesetzte, mit dem Rohr 4 außen fluchtende Spitze 5 z.B. aus Kunststoff.

Über der Spitze 5 hängt im Rohr 4 ein Elektromotor 6. An der lotrecht nach unten weisenden Motor-Abtriebswelle 7 ist ein Unwuchtgewicht 8, von etwa 0,8 gr. befestigt.

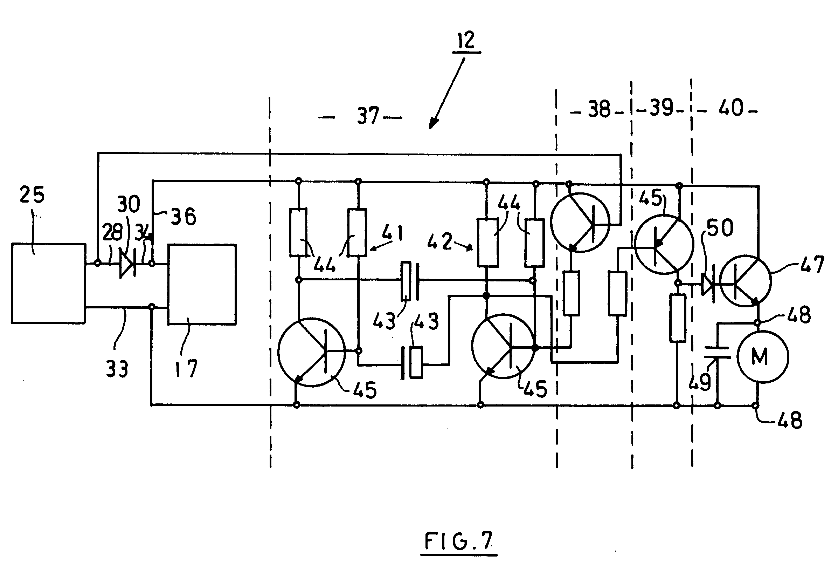

Der Elektromotor 6 hängt mit zwei Phosphorbronze-Federzungen 9, die zugleich als elektrische Leiter dienen, mit Abstand am unteren Ende einer Platine 10, welche Bausteine 11 einer Energie-Spar-Intervall-Elektronik 12 trägt. (Fig.7).

Der Kopf 3 ist aus einem Kunststoff-Rohrkreuz 13 und einer angeformten Pultfläche 14 gebildet.

Ein unteres, lotrecht verlaufendes Rohrstück 15 des Rohrkreuzes 13 ist dicht und fest auf das obere Ende des Aluminiumrohres 4 aufgesetzt, z.B. geklebt.

Darüber verläuft ein waagerecht angeordnetes Rohrstück 16, das im Inneren zwei zylindrische, hintereinander liegende NC-Akkus 17 aufnimmt.

Ein Ende des Rohrstückes 16 ist offen und mittels abdichtender Schalt- und Verschlußkappe 18 verschlossen, so daß die Akkus 17 entnommen werden können. Die Schalt- und Verschlußkappe 18 ist als drehbare Schnappkappe ausgebildet, welche gleichzeitig als Schalter zur Betätigung des Gerätes dient.

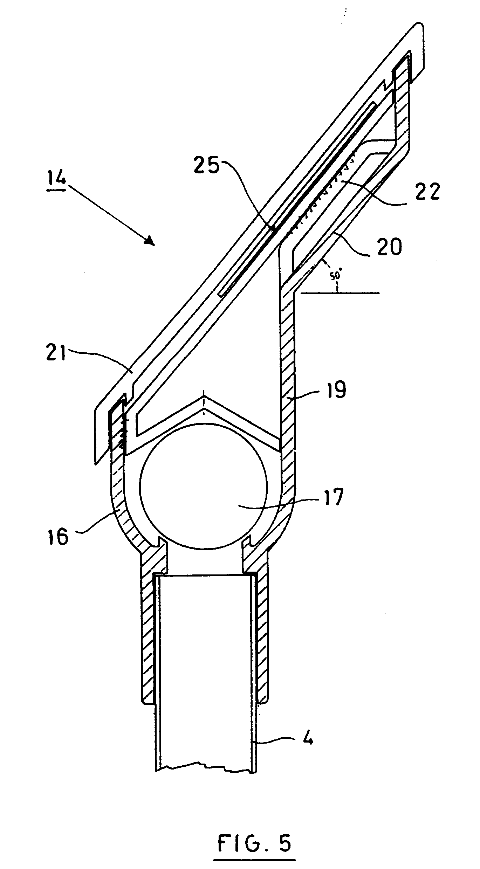

Darüber liegt nochmals ein nur angedeutet erkennbares, lotrecht verlaufendes Rohrstück 19 (Fig. 5) das jedoch die Pultfläche 14 trägt.

Die Pultfläche 14 hat ein vom Rohrstück 19 mitgebildetes, gehäuseartiges Unterteil 20, das oben von einer absolut dicht schließenden Acrylglasplatte 21 verschlossen ist. Die Acrylglasplatte 21 ist von einem äußeren, schwarzen Rahmen aus ABS-Kunststoff eingefaßt. Außerdem hat das Unterteil 20 zwei in Richtung Acrylglasplatte 21 vorspringende, etwa quadratförmige Einformungen 22, die als Auflage- und Befestigungsflächen für eine Solarzellen-Trägerplatte 23 dienen. An ihrem unteren Ende ist diese Trägerplatte 23 lotrecht nach unten abgewinkelt und ragt in das von der Pultfläche 14 oben angeschnittene, waagerecht verlaufende Rohrstück 16 hinein. Daselbst ist ein dachförmiger Fortsatz 24 angeformt, der die Akkus 17 von oben bedeckt.

Auf der Trägerplatte 23 sind acht Solarzellen 25, z.B. des Typs "Schindelstring T Z SS 4916/08" befestigt.

Die Solarzellen 25 haben einen Plus-Pol 26 und einen Minus-Pol 27. Eine Plusleitung 28 führt bis in eine Kammer 29 des waagerechten Rohrstückes 16 und ist mit einer Sperrdiode 30 verbunden, die Strom nur in Richtung Akku 17 durchläßt. Die Sperrdiode ist als "Schottky-Barrier-Diode ausgeführt. Dadurch wird erreicht, daß der Spannungsverlust bei kleinem Strom nur 0,3 V beträgt. Bei größerem Ladestrom erhöht sich der Spannungsabfall auf 0,9 V. Hierdurch ist eine zusätzliche Laderegelung gegeben. Vor der Sperrdiode 30 ist noch eine Leitung 31 angeschlossen, die zur Platine 10 führt. Vom Minus-Pol 27 führt eine Leitung 32 zum Verschlußkappengewinde, eine weitere Leitung 33 führt von diesem zur Platine 10. Eine Druckfeder 34, vor der Schalt- und Verschlußkappe 18, hält die Akkus 17 in Kontakt und verbindet gleichzeitig die Leitungen 32 und 33. Bei gelöster Schalt- und Verschlußkappe 18 ist das Gerät 1 außer Betrieb.

Die Sperrdiode 30 ist ausgangsseitig über eine Plusleitung 34 mit einer Metallscheibe 35 verbunden, an der der vordere Akku mit dem Plus-Pol anliegt. Von der Metallscheibe 35 führt eine Plusleitung 36 zur Platine 10.

Die Platine 10 trägt die Energie-Spar-Intervall-Elektronik 12.

Letzere besteht aus einem Intervallschalter 37, einer Regeleinheit 38, einer Treiberstufe 39 und einem Leistungsschalter 40.

Der Intervallschalter 37 hat zwei im Gegentakt arbeitende, transistorgeschaltete R-C-Glieder 41 und 42. Zwei Festkondensatoren 43 unterschiedlicher Kapazität werden abwechselnd über Widerstände 44 aufgeladen. Aus Spannung, Widerstand und Kapazität ergibt sich die Aufladezeit, nach welcher Transistoren 45 die Treiberstufe 39 und den Leistungsschalter 40 öffnen und schließen. Die Einschaltzeit ist auf etwa eine Sekunde festgelegt.

Die Pausenzeit wird jedoch von der Regeleinheit 38 verändert. Die Sperrdiode 30 erzeugt, weil sie eine Akku-Entladung verhindert, zwischen der Leitung 34 und der Plusleitung 28 eine von der Sonneneinstrahlung abhängige Spannungsdifferenz. Vor der Diode 30 ist eine Steuerleitung 46 angeschlossen, die diese Spannungsdifferenz abgreift und der Regeleinheit 38 zuführt. Gegenüber der Plusleitung 36 kann die Spannung vor der Diode 30 bei vollem Sonnenlicht höher, bei Dunkelheit niedriger sein. Die jeweiligen Unterschiede werden benutzt, um das Basispotential des Transistors 45 des pauseschaltenden R-C-Gliedes 42 zu verändern. Damit verändert sich von den maßgebenden Größen: Spannung, Widerstand und Kapazität eines R-C-Gliedes bei sonst konstanten Größen die Spannung und damit die Zeitcharakteristik. Auf diese Weise können kurze Pausen von fünfzig Sekunden Dauer bis lange Pausen von z.B. 180 Sekunden Dauer fließend, lichtabhängig geschaltet werden.

Der Leistungsschalter 40 hat einen Leistungstransistor 47 und einen parallel zu Energie-Abgabe-Lötstellen 48, an denen die Phosphorbronze-Federzungen 9 angelötet sind, einen Entstörkondensator 49. Um Schaltspitzen von den übrigen Bausteinen 11 fernzuhalten, hat der Leistungstransistor 47 an seiner Basis eine vorgeschaltete Diode 50.

Wenn die Intervall-Elektronik 14 auf Betrieb schaltet, dreht der Elektromotor 6, und aufgrund des Unwuchtgewichtes 8 werden Rüttelschläge auf das Aluminiumrohr 4 übertragen, die als lautes Schnarren hörbar sind. Die lichtabhängig unterschiedlichen Pausen verhindern Gewöhnungseffekte bei den Schädlingen, schützen die Akkus vor Überladung und gewähren auch bei schlechten, lichtarmen Wetter störungsfreien Betrieb des Gerätes 1.

Als mechanische Aussteifung sind unten am Rohrkreuz 13 zwei Rippen 51 angeformt.

Ein Hohlniet 52, das am unteren Ende der Platine 10 zur zusätzlichen Befestigung der Phosphorbronze-Federzungen 9 dient, ist so lang ausgebildet, daß es die Bauelemente 11 auf der Platine 10 überragt. So wird verhindert, daß Bauelemente 11 gegen das Aluminiumrohr 4 schlagen, wenn der Elektromotor 6 arbeitet.

Alle in der Beschreibung und/oder den Zeichnungen dargestellten Einzel- und Kombinationsmerkmale werden als erfindungswesentlich angesehen.

Es versteht sich von selbst, daß die Erfindung nicht auf das dargestellte und beschriebene Ausführungsbeispiel beschränkt sein soll. Vielmehr stellt dieses nur ein vorteilhaftes Ausführungsbeispiel dar.

## Patentansprüche

1. Gerät zur Vertreibung von Maulwürfen, Wühlmäusen o.dgl., bestehend aus einem in das Erdreich einsteckbaren, rohrförmigen, mit einer Spitze (5) versehenen Pfahl (2) und aus einem am oberen Ende des Pfahles gehaltenen, gehäuseförmigen Kopf (3), wobei am unteren Ende des Pfahles, innen, ein elektrisch betriebener, das Rohr zur Schallabgabe an das Erdreich erregender Schallgeber (6) vorgesehen ist, zwischen Schallgeber (6) und Kopf (3) im Inneren des Rohres eine in Rohr-Längsrichtung verlaufende Platine (10) mit Energie-Spar-Intervall-Elektronik untergebracht und der Kopf als Energieversorgungseinheit ausgebildet ist,
dadurch gekennzeichnet,
daß der Schallgeber ein Elektromotor (6) ist, der mit parallel zur Rohrachse verlaufender Drehachse mittels zweier Phosphorbronze-Federzungen (9) im Abstand unter dem unteren Ende der Platine (10) gehalten und zugleich mit Energie-Abgabe-Lötstellen (48) der Platine (10) verbunden und an den nach unten weisenden Abtriebswellenende (7) mit einem Unwucht-Gewicht (8) versehen ist,
daß der Kopf (3) ein Kunststoff-Rohrkreuz (13) mit oben angesetzter Pultfläche (14) ist, das mit einem nach unten offenen, lotrecht verlaufenden Rohrstück (15) kappenartig dicht und fest auf dem oberen Ende des schallabgebenden Rohres (4) aufsitzt, in einem darüberliegenden, waagerecht verlaufenden Rohr-tück (16), welches einendig eine dichtschließende Schaltund Verschlußkappe (18) aufweist, aufladbare Akkus (17) enthält und mit einem oberen, lotrecht verlaufenden Rohrstück (19) die mit ihrer Unterkante in Höhe des waagerecht verlaufenden Rohrstückes (16) verlaufende und an dieses angeformte Pultfläche (14) trägt,
daß die Pultfläche (14) außerdem einstückig an das obere Rohrstück (19) angeformt ist, auf der Oberseite einen Satz Solarzellen (25) zum Aufladen der Akkus (17) trägt, die nach oben hin von einer die gesamte Pultfläche (14) übergreifender Acrylglas-Platte (21) abgedeckt sind.

2. Gerät nach Anspruch 1,
dadurch gekennzeichnet,
daß die Pultfläche (14) ein gehäuseartiges Unterteil (20) und die Acrylglasplatte (21) als Oberteil aufweist, wobei die Acrylglasplatte von einem Rahmen aus dunklem Kunststoff eingefaßt ist,
daß das Unterteil (20) zwei in Richtung Acrylglasplatte (21) vorspringende, etwa quadratförmige Einformungen (22) als Auflageflächen für eine Solarzellen-Trägerplatte (23) aufweist, die aus Kunststoff besteht und am unteren Ende lotrecht abgewinkelt in das waagerecht verlaufende Rohrstück (16) reicht sowie am unteren Ende der Abwinklung mit einem dachförmigen Fortsatz (24) über den Akkus (17) verläuft.

3. Gerät nach Anspruch 2,
dadurch gekennzeichnet,
daß auf der Solarzellen-Trägerplatte (23) acht in Serie geschaltete, multikristalline Solarzellen mit einer Gesamtgröße von 121,4 X 49,2 mm angeordnet sind,
daß zwei zylindrische NC-(Nickel-Cadmium)-Akkus (17) im waagerecht verlaufenden Rohrstück (16) hintereinander und mit dem Minus-Pol zur Schalt- und Verschlußkappe (18) weisend vorgesehen sind,
und daß in der Leitung vom Plus-Pol (27) der Solarzellen (25) zum Plus-Pol der Akkus (17) eine Sperrdiode (30) als Akku-Entladeschutz vorgesehen ist.

4. Gerät nach Anspruch 3,
dadurch gekennzeichnet,
daß die Energie-Spar-Intervall-Elektronik (12) einen Intervallschalter (37) mit zwei Gegentakt-R-C-Gliedern (41, 42), eine Regeleinheit (38), eine Treiberstufe (39) und einen mit den Anschluß-Punkten (48) des Elektromotors (6) verbundenen, elektronischen Leistungsschalter (40) aufweist,

daß ein R-C-Glied (40) fest auf eine, eine Sekunde dauernde Betriebszeit des Elektromotors (6) eingestellt ist, während das andere R-C-Glied (42) über die Regeleinheit (38), welche vor der Diode (30) mit dem Plus-Pol (27) der Solarzellen (25) verbunden ist auf lichtabhängig veränderbare Pausenzeiten zwischen einhundertachtzig Sekunden bei Dunkelheit und fünfzig Sekunden bei vollem Sonnenlicht einstellbar ist.

## Claims

1. Device for repelling moles, voles or the like, comprising a pole (2) formed like a pipe and provided with a point (5) insertable into the soil and a case-like head (3) kept at an upper end of said pole (2), whereby within the lower end of said pole (2) is provided an electrically operated source of sound (6) exciting said pipe to emit sound into said soil and a bottom plate (10) running parallel to a longitudinal direction of said pipe together with an energy-saving interval electronic unit is accommodated between said source of sound and said head (3), and said head (3) is formed as an energy-supply-unit,
characterized in that,
said source of sound is an electric motor (6) which, together with a rotational axis running parallel to said pipe axis, is being held at a distance below the lower end of said bottom plate (10) by means of two flexible tongues (9) made of phosphoric bronze and which, at the same time, is connected to energy-supply-soldering points (48) of said bottom plate (10) and which is provided with a balanced weight (8) at an end of a motor shaft (7) pointing towards the bottom,
said head (3) is a pipe cross (13) made of plastic material, having a joined desk top (14) overhead which, together with a pipe section (15) being open towards said bottom and running vertical, rests tight and firm on the upper end of said sound-emitting pipe (4) like a cap and which contains chargeable accumulators (17) in a pipe section (16) lying above and running horizontal thereto and comprising at the one end a tightly closing switch and sealing cap (18) and which carries together with an upper vertical running pipe section (19) said desk top (14) running parallel to its lower edge in height of said horizontal running pipe section (16) and being formed thereon, said desk top (14), in addition, is integrally arranged to said upper pipe section (19) and carries on its top side a set of solar cells (25) for charging said accumulators (17) covered towards the top by an acrylic glass plate (21) overlapping said entire desk top (14).

2. Device according to claim 1,
characterized in that,
said desk top (14) comprises a case-like lower part (20) and said acrylic glass plate (21) as an upper part, whereby said acrylic glass plate (21) is enclosed by a frame consisting of a dark synthetic material, said lower part (20) comprises two recesses (22) of about square shape, projecting towards said acrylic glass plate (21) and being used as bearing surfaces for a solar cell carrier plate (23) which consists of synthetic material and, being vertical bent off at the lower end, extends into said horizontal running pipe section (16) as well as passes over said accumulators (17) provided with a roof-like extension (24) at the lower end of said bending off.

3. Device according to claim 2,
characterized in that,
eight multicrystalline solar cells having a total size of 121,4 x 49,2 cm and being in series are arranged on said solar cell carrier plate (23); two cylindrical NC-(nickel cadmium)-accumulators (17) are provided in said horizontal running pipe section (16) in series and pointing with the negative pole towards said switch and interlocking cap (18), and that a diode (30) is provided in the line from the plus pole of said solar cells (25) to the plus pole of said accumulators (17) as an accumulator discharging protection means.

4. Device according to claim 3,
characterized in that,
said energy-saving-interval-electronics (12) comprises an interval switch (37) provided with two push-pull-R-C-modules (41, 42) and a control unit (38) and a driver stage (39) and an electronic power circuit breaker (40) connected to said energy-supply-soldering points (48) of said electric motor (6);
one R-C-module (40) is constant adjusted to an operating time of said electric motor (6), lasting one second, whereas the other R-C-module (42) can be adjusted via said control unit (38) connected in front of said diode (30) to the plus pole (27) of said solar cells (251, to changeable, light-dependent intermittent times between one hundred and eighty seconds at darkness and fifty seconds at full sunlight.

**Revendications**

1. Appareil pour éloigner les taupes, les campagnols ou similaires, composé d'une tige (2) tubulaire qu'une extrémité pointue (5) permet de ficher dans la terre, et d'une tête (3) en forme de boîtier, située à l'extrémité supérieure de la tige; la partie inférieure de la tige renferme un transducteur (6) actionné à l'électricité et incitant le tube à transmettre des sons à la terre; entre le transducteur (6) et la tête (3), la tige renferme une platine (10) longitudinale équipée d'un système électronique d'économie d'énergie à intermittence; l'unité d'alimentation en énergie est logée dans la tête.
   Caractéristiques :
   l'inducteur est un moteur électrique (6), suspendu à un pivot parallèle au tuyau et maintenu écarté à l'aide de deux ressorts en bronze phosphoreux (9), sous l'extrémité inférieure de la platine (10) à laquelle il est également raccordé par des brasures servant de contact (48); l'extrémité inférieure de l'arbre (7) est munie d'un poids de déséquilibre (8);
   la tête (3) se compose d'une partie tubulaire en plastique (13) surmontée d'un pupitre (14); un raccord en plastique en forme de croix (15), ouvert dans le bas, permet d'emboîter hermétiquement cet ensemble sur l'extrémité supérieure du tube de transmission des sons (4); la partie tubulaire horizontale supérieure (16) dont l'une des extrémités présente un commutateur hermétique (18), renferme des accumulateurs rechargeables (17) et supporte le pupitre (14), avec le bord inférieur d'une partie tubulaire (19) verticale; le pupitre (14) est par ailleurs fixé d'un seul bloc à la partie tubulaire supérieure (19); sa face supérieure est équipée de cellules solaires (25) servant à recharger les accumulateurs (17); les cellules sont recouvertes par une plaque de plexiglas (21) prenant l'ensemble du pupitre.

2. Appareil, conformément à la demande 1
   Caractéristiques :
   la partie inférieure (20) du pupitre (14) est une sorte de boîtier, sa partie supérieure est constituée d'une plaque en plexiglas (21) encastrée dans un cadre en plastique sombre; la partie inférieure (20) présente deux renfoncements (22) approximativement carrés et orientés vers la plaque de plexiglas (22); ils servent d'appuis à un support de cellules solaires (23); ce dernier est en plastique; l'angle formé par son extrémité inférieure lui permet de se prendre dans la partie tubulaire horizontale (16); de la même manière, à l'extrémité inférieure de l'angle, un prolongement en forme de toit (24) recouvre les accumulateurs (17).

3. Appareil, conformément à la demande 2
   Caractéristiques :
   sur le support de cellules solaires (23) sont disposées huit cellules solaires à cristaux multiples, connectées en série et d'une taille totale de 121,4 x 49,2 mm; la partie tubulaire horizontale (16) renferme, l'un derrière l'autre, deux accumulateurs cylindriques nickel-cadmium (17) dont le pôle négatif est orienté vers le commutateur hermétique (18); le câble reliant le pôle positif (27) des cellules solaires (25) au pôle positif des accumulateurs (17), comporte une diode de blocage (30) empêchant les accumulateurs de se décharger.

4. Appareil, conformément à la demande 3
   Caractéristiques :
   le système électronique d'économie d'énergie à intermittence (12) présente un commutateur intermittent (37) avec deux circuits RC en push-pull (41, 42), une unité de réglage (38), un plot d'attaque (39) et un sectionneur électronique de puissance (40) relié aux points de jonction (48) du moteur électrique (6); l'un des circuits RC (40) est réglé à demeure sur un temps de fonctionnement du moteur électrique (6) d'une seconde, tandis que l'autre circuit RC (42) peut, par l'intermédiaire de l'unité de réglage (38) raccordée au pôle positif (27) des cellules solaires (25) en amont de la diode (30), être réglé sur des temps de pause changeables et fonctions de la luminosité, temps pouvant être compris entre cent quatre-vingt secondes en cas d'obscurité et cinquante secondes en cas de plein soleil.

FIG.1

FIG.2

8

FIG.3

FIG.4

FIG. 5

FIG.6

FIG.7